# EUROPEAN PATENT APPLICATION

(11) **EP 4 614 433 A1**
(43) Date of publication of application: **10.09.2025**
(21) Application number: 24162292.7
(22) Date of filing: 08.03.2024
(51) Int. Cl.: G06T 7/00

(54) **SYNTHESIZING CONTRASTED X-RAY-BASED IMAGE DATA**

(71) Applicant: Koninklijke Philips N.V., 5656 AG Eindhoven (NL)
(72) Inventor: KOLOKOLNIKOV, Georgii, Eindhoven (NL); WISSEL, Tobias, Eindhoven (NL); BARAGONA, Marco, 5656AG Eindhoven (NL); BAKKER, Bart Jacob, Eindhoven (NL); NICKISCH, Hannes, Eindhoven (NL); HEESE, Harald Sepp, Eindhoven (NL); BUERGER, Christian, Eindhoven (NL)
(74) Representative: Philips Intellectual Property & Standards

(57) **Abstract**

A computer-implemented method for synthesizing combined x-ray-based image data comprising both contrasted and non-contrasted image data, the method comprising the following steps:
- receiving a non-contrasted x-ray-based image (20);
- segmenting of at least one target anatomical structure on the x-ray-based image to generate a segmentation (3) of the at least one target anatomical structure;
- based on the segmentation (3), generating a region-of-interest mask for the non-contrasted x-ray-based image (20);
- generating a modelled anatomical structure (8) that comprises a contrasted anatomical structure (9) and corresponds to the at least one target anatomical structure;
- applying a trained generative machine learning algorithm on the non-contrasted x-ray-based image (20) with the region-of-interest mask and on the modelled anatomical structure (8) to generate synthetic combined x-ray-based image data (13) comprising both contrasted and non-contrasted image regions, such that an area defined by the region-of-interest mask is changed based on the modelled anatomical structure (8) to be contrasted;
- providing the synthetic combined x-ray-based image data (13).

## Description

### FIELD OF THE INVENTION

The invention relates to a computer-implemented method for synthesizing contrasted x-ray-based image data, a corresponding computer program, an imaging processing device and a computer program comprising synthetic contrasted x-ray-based image data.

### BACKGROUND OF THE INVENTION

Contrasted x-ray-based image data are a useful tool for medical diagnosis. For example, a detailed visualization of the cardiovascular system may be achieved by computed tomography angiography (CTA). Via CTA, anomalies such as blockages, aneurysm, and stenosis of blood vessels can be detected. Cardiovascular diseases have been found to be the leading cause of death globally. Hence, the diagnostic of these diseases is of a high importance.

Interpretation of contrasted images, e.g. images containing information about specific pathologies in CTA, may be challenging, in particular for radiology students or novice specialists. An automated diagnostic tool that can support the analysis may thus be beneficial. Furthermore, providing a sufficient amount of sample data that can be used for demonstrational and/or educational purposes may be useful. In both cases, having a sufficient amount of contrasted x-ray-based image data is desirable, either for training purposes of a machine learning algorithm or for training purposes of radiologists and other experts.

To automate the diagnostic procedure in medical imaging, computer vision and machine learning algorithms are often utilized. Data plays a key role in machine learning-based approaches. Data-driven algorithms for medical applications require large corpora of well-curated data covering the full diversity of cases to be expected in clinical practice. However, often, a limited amount of data is available. Image data of x-ray-based imaging using contrast agent, such as CTA, are often particularly scarce. Furthermore, the available data may include a limited diversity of pathological cases and abnormalities, i.e. low content-wise diversity, or images registered only with a single-vendor device and/or a single clinical site, i.e. low style-wise diversity. Low content-wise diversity may affect the awareness of the model about the biological and pathological diversity, hence only a small part of a real data distribution may be covered by the training cohort. Preferably, the data used for algorithm training should allow generalizability of the model, and hence including rare pathological cases into the training cohort can improve the model. Low style-wise diversity may cause domain gap vulnerability. If a deployed algorithm receives images acquired with a different vendor's device, it may fail even if the real-world images are content-wisely covered by the training cohort. Preferably, the data used for validation of algorithms should be representative for a range of realistic scenarios to guarantee decent performance of the diagnostic model in production under a vast variety of clinical scenarios.

### OBJECT OF THE INVENTION

It is, therefore, an object of the invention to provide a method to better address the above-mentioned problems. In particular, it would be desirable to find a solution that allows providing a greater amount of contrasted x-ray-based image data, in particular contrasted computed tomography angiography data.

### SUMMARY OF THE INVENTION

To better address this object, a method according to claim 1, a computer program according to claim 13, an image processing device according to claim 14 and a computer program according to claim 15 are provided. Advantageous embodiments are set out in the dependent claims. Any features, advantages or alternative embodiments described herein in relation to the claimed method are also applicable to the other claim categories and vice versa.

According to a first aspect, a computer-implemented method for synthesizing combined x-ray-based image data comprising both contrasted and non-contrasted image data, in particular contrasted computed tomography angiography data, is provided. The method comprises the following steps:
- receiving a non-contrasted x-ray-based image, in particular a non-contrasted computed tomography image;
- segmenting of at least one target anatomical structure, e.g. a heart, on the x-ray-based image to generate a segmentation of the at least one target anatomical structure;
- based on the segmentation of the at least one target anatomical structure, generating a region-of-interest mask for the non-contrasted x-ray-based image;
- generating and/or obtaining a modelled anatomical structure corresponding to the at least one target anatomical structure, the modelled anatomical structure comprising a contrasted anatomical structure;
- applying a trained generative machine learning algorithm, in particular a trained generative adversarial neural network, on the non-contrasted x-ray-based image with the region-of-interest mask, wherein the modelled anatomical structure is used as further input for the trained generative machine learning algorithm, to generate synthetic combined x-ray-based image data comprising both contrasted and non-contrasted image regions, in particular synthetic contrasted computed tomography angiography data, such that an area defined by the region-of-interest mask is replaced and/or changed based on the modelled anatomical structure to be contrasted;
- providing the synthetic combined x-ray-based image data comprising both contrasted and non-contrasted image regions.

Advantageously, the method may provide a relatively easy to use way of providing a larger amount of contrasted x-ray-based image data. In particular, a greater variance of different image data may be generated. For example, the image data may be used for the development and/or validation of data-driven solutions, such as for the training of machine learning algorithms. By generating image data via this method, the problem of a limited amount of data being available may be overcome. Machine learning, in particular deep learning, tends to be data demanding. A larger training data set enabled via data generated by this method may help to avoid overfitting and poor performances of machine learning models. Furthermore, by using the synthetic image data, problems concerning privacy-related regulations may be avoided. Since the synthetic image data are not generated from scratch but are based on real (non-contrasted) x-ray-based image, it may be easier to avoid image artefacts. Furthermore, image data generated via this method may be useful for further purposes. For example, the synthetic image data may be used as an educational element, e.g. for virtual training environments, and/or as demonstrational tool, such as to train users of specific x-ray-based products and devices, such as specific computed tomography systems. For example, synthetically generated contrasted computed tomography angiography data may be used for training purposes.

Image data may, for example, comprise three-dimensional and two-dimensional image data. X-ray-based image data may generally be any image data that are generated by means of x-ray-based imaging. X-ray-based image data may in particular be computed tomography image data. Contrasted x-ray-based image data may be x-ray-based image data wherein any kind of contrast enhancing measure, such as the application of contrast agent, has been applied prior to measuring the data. For example, the contrasted x-ray-based image data may be contrasted computed tomography angiography data. On the other hand, in the context of this invention, non-contrasted does not have to mean that the image has no image contrast at all, but that the image is not contrast-enhanced by a contrast enhancing measure, such as a contrast agent.

The term "synthesizing image data" as used herein is to be understood broadly and generally describes the generation of image data completely or partially via an artificial generation. A particular example of artificial generation is the generation by a computer algorithm, such as a machine learning algorithm. The term "combined x-ray-based image data comprising both contrasted and non-contrasted image data" is to be understood broadly in the context of this invention. It generally refers to image data that has areas with contrasted and areas with non-contrasted image data. The invention does not have to be limited to a particular ratio of both areas. Hence, for example, the combined image data may be predominantly contrasted or may be predominantly non-contrasted. In some cases, the combined x-ray-based image data may be referred to as hybrid image data comprising both contrasted and non-contrasted image data.

The method comprises receiving a non-contrasted x-ray-based image, such as a non-contrasted computed tomography image. For example, the non-contrasted image may be received from a database and/or via user input. The database may be an internal database of a computer system that performs the method or an external database. Hence, the generation of the synthetic image data may be based on non-contrasted images, such as images that have been acquired without the application of contrast agent. Advantageously, non-contrasted images are typically much more common than contrasted x-ray-based image data and are thus easier to acquire and available in greater numbers. This method may thus allow to increase the number of available contrasted x-ray-based image data. The non-contrasted image data may be used as a high-quality, ideally artefact-free, real-world background for the image synthesis. For example, using the non-contrasted image data as basis may allow to reduce the costs and/or effort of generating the synthetic image data compared to the use of phantoms because phantoms are typically expansive and complex to model. On the other hand, generating synthetic image data from scratch, in particular without any real image basis may be more challenging and may result in increased numbers of image artefacts. The non-contrasted image data may have the function of providing carrying anatomies for the synthesized image data.

The method further comprises segmenting of at least one target anatomical structure on the non-contrasted x-ray-based image. Thus, a segmentation of the at least one target anatomical structure is generated. For example, the target anatomical structure may be an organ. For example, the target anatomical structure may be a heart, heart chambers, lung lobes, bone structures, etc. The term "segmentation" as used herein is to be understood broadly. It typically defines an outline and/or shape of an object, in particular anatomical object. In this case, the anatomical object is the target anatomical structure. Hence, for example, the segmentation may define the outline of a heart. Generally, the segmentation may be generated according to any method as known in the state of the art. For example, a trained segmentation model may be used. The trained segmenting model may be a trained segmenting neural network. For example, in case of three-dimensional image data, the segmenting may result in surface meshes and/or volumetric labels of the target anatomical structure. For example, a model-based segmentation approach may be used. The model-based segmentation approach may, for example, be performed analogously as described by Ecabert et al. in "Automatic Model-Based Segmentation of the Heart in CT Images". In IEEE Transactions on Medical Imaging, vol. 27, no. 9, pp. 1189-1201, Sept. 2008, doi: 10.1109/TMI.2008.918330. For example, a deep learning-based segmentation approach may be used. One way of performing a deep learning-based segmentation that may also be applied here is described in the state of the art by Wasserthal, Jakob, et al. in "TotalSegmentator: robust segmentation of 104 anatomical structures in CT images.", arXiv preprint arXiv:2208.05868 (2022).

Based on the segmentation, a region-of-interest mask is generated for the non-contrasted x-ray-based image. For example, the segmentation may be used and/or adapted as a label mask for use as input to the machine learning algorithm. The term region-of-interest mask is to be understood broadly. It generally denotes a mask defining a region of interest. In this case, the region of interest in particular defines the region of the target anatomical structure within the image. The region-of-interest mask may mark and/or label for the machine learning algorithm where to insert and/or apply the contrasted image data.

Furthermore, a modelled anatomical structure comprising a contrasted anatomical structure is generated and/or obtained. Optionally, parts of the modelled anatomical structure may be non-contrasted. A contrasted anatomical structure is in particular an anatomical structure that is part of the modelled anatomical structure and that is contrast-enhanced. The modelled anatomical structure may for example be obtained by receiving the modelled anatomical structure from an external source, such as from an external database. For example, the modelled anatomical structure may be based on a corresponding anatomical structure from another source, such as from another subject. A subject may for example be a human being, such as a patient, or an animal. Additionally or alternatively, the modelled anatomical structure may be based on the target anatomical structure. For example, the modelled anatomical structure may be based on a segmentation of an anatomical structure from another subject. For example, the modelled anatomical structure may be generated such that it is based on the segmentation of the at least one target anatomical structure, wherein the contrast of the contrasted anatomical structure is added. For example, a virtual application of contrast medium may be added to the at least one target anatomical structure. The modelled anatomical structure may comprise a property that is different from the corresponding property of at least one target anatomical structure

The term "trained generative machine learning algorithm" is to be understood broadly in the context of this invention. It generally describes a machine learning algorithm that is adapted to perform the generation of data, in particular image data. For example, image data may be generated by image-to-image translations from input image data. The trained generative machine learning algorithm may in particular comprise a Generative Adversarial Network (GAN). A GAN may, for example, be trained using paired images in order to learn to generate a target image from an input image. In the context of this disclosure, the input image may in particular be the non-contrasted x-ray-based image. The GAN is composed of a generator and a discriminator. The generator creates synthetic images from the input image, and the discriminator aims to differentiate the synthetic images from real images.

According to an embodiment, the GAN is based on spatially adaptive normalization. The GAN may comprise an effective layer for synthesizing images based on an input semantic layout. Furthermore, each normalization layer may use a label mask to modulate the layer activations. The segmentation may first be projected onto an embedding space and then convolved to produce modulation parameters. Advantageously, this may allow to better preserve the prior information contained in the segmentation. For example, The GAN may be a spatially adaptive denormalization GAN such as SPADE GAN described by Park et al. in "Semantic image synthesis with spatially-adaptive normalization." Proceedings of the IEEE/CVF conference on computer vision and pattern recognition. 2019. Alternatively, convolution layers in the SPADE block may be replaced by a guided sampling, in particular using a class adaptive denormalization GAN. This may result in fewer neural network parameters and lower computational cost while still providing comparable performance. Such a modification is described by Tan et al. in "Efficient semantic image synthesis via class-adaptive normalization." IEEE Transactions on Pattern Analysis and Machine Intelligence, 2021.

The non-contrasted x-ray-based image, the region-of-interest mask, and the modelled anatomical structure are input parameters for the trained generative machine learning algorithm. Based on the input, the generative machine learning algorithm is trained to generate synthetic contrasted x-ray-based image data. The area defined by the region-of-interest mask is replaced and/or changed to be contrasted. For example, the area defined by the region-of-interest mask may be directly replaced by the modelled anatomical structure. For example, the area defined by the region-of-interest mask may be changed such that the at least one target anatomical structure is additionally enhanced to comprise the contrast of the contrasted anatomical structure. Optionally, further changes may be added to the at least one target anatomical structure. The region-of-interest mask may be used to highlight the corresponding area on the at least one target anatomical structure. Optionally, the input to the trained generative machine learning algorithm may comprise the non-contrasted computed tomography image with the region defined by the region-of-interest mask being highlighted. Preferably, the trained generative machine learning algorithm is trained such, that the area of the synthetic combined x-ray-based image data outside the region-of-interest mask is the same as the area of the non-contrasted computed tomography image outside the region-of-interest mask. The area inside the region-of-interest mask, however, is changed with respect to the original non-contrasted x-ray-based image. The synthetic combined x-ray-based image data comprises both contrasted and non-contrasted image regions. In particular, the trained generative machine learning algorithm changes the appearance of the non-contrasted x-ray-based image to the appearance of a contrasted image, wherein some region, namely the region defined by the region-of-interest mask, is contrast-enhanced. For example, a synthetic three-dimensional computed tomography angiography image may be generated.

According to an embodiment, the segmenting is performed by a trained segmentation algorithm, wherein the segmentation algorithm outputs the segmentation and at least one annotation corresponding to the segmentation, wherein the annotation is provided together with the synthetic combined x-ray-based image data. The at least one annotation may be generated according to methods as known in the state of the art in the context of segmentation algorithms. Synthetic training data may be more valuable for training purposes, in particular for training supervised learning algorithms, when they are paired with corresponding annotations. Advantageously, the annotation gained via the segmentation process may thus be used together with the generated synthetic image data. This may enable a better performance of the algorithm that is trained with the training data and/or allow to avoid a manual analysis of the data, e.g. by a physician, thus potentially saving time and/or money.

According to an embodiment, generating the region-of-interest mask based on the segmentation comprises dilating the region-of-interest mask with respect to the segmentation. Hence, the region-of-interest mask may comprise a larger area and/or volume than the segmentation. The dilating may serve as a safety margin. The dilating may allow a greater flexibility of the adaption of the image within the region-of-interest mask. For example, a greater variety of data may be generated this way, thus making the synthetic image data more representative for a wider range of real anatomical structures, variants of diseases etc.

According to an embodiment, the generative machine learning algorithm is trained to generate the synthetic combined x-ray-based image data by inpainting the modelled anatomical structure into the region-of-interest mask on the non-contrasted x-ray-based image. Hence, the application of the trained generative machine learning algorithm may be analogous to an inpainting into the area defined by the region-of-interest mask. Optionally, additionally, the original image information from the region-of-interest mask may also be presented to the algorithm, since the image information from within this area may be input together with the region-of-interest mask. Hence, the algorithm may have more information, allowing for an inpainting that is better adapted also with respect to the original structure within the region-of-interest mask.

According to an embodiment the segmentation is voxelized, in particular with binary voxels, when the region-of-interest mask is generated. Additionally or alternatively, the modelled anatomical structure is voxelized prior to applying the trained generative machine learning algorithm on it. Hence, the region-of-interest mask may be a binary mask. A binary mask typically defines what area is part of an object and what area is not part of an object. For example, a binary mask may attribute an affirming value, e.g. the value 1, to all coordinates of an image that are within the object, and a non-affirming value, e.g. the value 0, to all coordinates of an image that are outside the object. Voxelizing can be understood to be a conversion of objects from a continuous geometric representation into a set of voxels that approximate the continuous object. For the voxelization a voxelization algorithm may be applied. Voxelization algorithms are generally known in the state of the art. It has been found that the voxelization may help to achieve better results when applying the trained generative machine learning algorithm.

According to an embodiment, the modelled anatomical structure comprises an anatomical shape corresponding to the shape of the at least one target anatomical structure. The anatomical shape may be generated based on the segmentation of the at least one target anatomical structure. Hence, according to this embodiment, a particularly simple way of generating the modelled anatomical structure may be provided, by allowing to reuse the anatomical structure of the segmentation step.

According to an embodiment, the modelled anatomical structure is based on a premade average model that is adapted according to the target anatomical structure. For example, the premade average model may be adapted such that it fits into the region-of-interest mask. The premade average model may in particular comprise the contrasted anatomical structure. Optionally, the contrasted anatomical structure may be obtained as separate item that is added to the modelled anatomical structure and/or to the premade average model. By adapting the premade average model according to the target anatomical structure, it may be achieved that the modelled anatomical structure generally matches to the dimensions and features of the non-contrasted x-ray-based image. For example, the premade average model may comprise at least one further characteristic property. The at least one further characteristic may comprise a medical condition and/or a time-dependent phase of the anatomical structure. A time-dependent phase may, for example, be a heart phase of a heart. A medical condition may, for example, be a pathological case and/or an abnormality. For example, the medical condition may be a coronary artery occlusion. Hence, a model having the particular properties may be adapted to fit into the general structure of the non-contrasted computed tomography image. Different premade average models representing multiple pathological cases and abnormalities may be used in multiple applications of the method. Advantageously, synthetic data may thus be generated that is representative of a wider diversity of medical content. Additionally or alternatively, different premade average models representing multiple image properties that are device-dependent and/or dependent on different clinical sites may be used in multiple applications of the method. Advantageously, synthetic data may thus be generated that is representative of a wider diversity of styles.

For example, the premade average model may be an active shape model that is embedded into an elastically deformable surface model. In this embodiment, the deformable model may be represented by a mesh. The mesh may be adapted to the region-of-interest mask, in particular to match the shape of the target anatomical structure. The generation and adaption of such a model may be performed analogously to the way described by Weese et al. in "Shape Constrained Deformable Models for 3D Medical Image Segmentation". Information Processing in Medical Imaging, vol 2082, pp 380-387, 2001, doi: 10.1007/3-540-45729-1_38.

Another example of implementing the premade average model can be the application of extrapolated structures using anatomical structure encoding. The premade average model may comprise a segmentation mesh representing an anatomy model, in particular average anatomy model, of the type of the target anatomical structure. For example, the segmentation mesh may represent an average anatomy of a heart. The segmentation mesh may comprise a set of vertices and a set of elements. In particular, each element may be a convex combination of a small set of vertices. The elements may, for example triangles and/or tetrahedra. For example, positions of the structures in an average anatomy may be obtained from histological studies or specialized measurements. The contrasted anatomical structure may be represented relative to the segmentation mesh. An adaption of the premade average model may comprise a deforming of the segmentation mesh that adapts the segmentation mesh to the target anatomical structure, such that the contrasted anatomical structure is deformed in the same way as the segmentation mesh. The adaption may be performed based on the segmentation of the at least one target anatomical structure and/or based on the region-of-interest mask. The generation and adaption of such a model may be performed analogously to the way described by Nickisch et al. in "From Image to Personalized Cardiac Simulation: Encoding Anatomical Structures into a Model-Based Segmentation Framework", Statistical Atlases and Computational Models of the Heart. Imaging and Modelling Challenges, STACOM 2012, doi: https://doi.org/10.1007/978-3-642-36961-2_32.

Another example of implementing the premade average model can be an implementation as hierarchical structure activation of connected meshes. In this example, a generic model represented by a surface mesh may be adapted. The generic model may be built based on image data of the type of the target anatomical structure by generating a model geometry. The model may be adapted to the target anatomical structure, the segmentation of the target anatomical structure and/or the region-of-interest mask via a description of its shape variability. This implementation may be performed analogously as described by Ecabert et al. in "Segmentation of the heart and great vessels in CT images using a model-based adaptation framework", Medical image Analysis, pp 863-876, 2011, doi: 10.1016/j.media.2011.06.004 or by Kaus et al. in "Automated segmentation of the left ventricle in cardiac MRI", Medical Image Analysis 8, pp 245-254, 2004, doi: 10.1016/j.media.2004.06.015.

According to an embodiment, the modelled anatomical structure is generated based on the target anatomical structure by modifying the target anatomical structure at least by adding the contrast of the contrasted anatomical structure and optionally by modifying further characteristics of the target anatomical structure. For example, in order to add the contrast, the contrasted anatomical structure may be added directly to the target anatomical structure or at least part of the target anatomical structure may be changed to be contrasted, such that this part becomes the contrasted anatomical structure. Advantageously, the original structure may thus be used as basis for generating the modelled anatomical structure. For example, the segmentation of the at least one target anatomical structure may be used as to define the anatomical structure the modelled anatomical structure is based on. Hence, in particular the information gained by the segmentation step may be reused in this step of generating the modelled anatomical structure.

According to an embodiment modifying further characteristics comprises one or several of the following: changing the anatomical shape of the target anatomical structure within the constraints of the region-of-interest mask via a shape changing algorithm, changing a medical condition of the target anatomical structure, and/or changing a time-dependent phase of the target anatomical structure. Additionally, or alternatively, features characteristic for particular imaging systems and/or clinical sites may be added and/or changed. Characteristics for a for particular imaging systems may, for example, be dependent on a particular manufacturer and/or on a particular model. Different models may lead to slightly varying image data. Changing a medical condition may, for example, comprise applying a particular pathological case and/or a particular abnormality. For example, a medical condition may be an artery occlusion. A time-dependent phase may, for example, be a heart phase of a heart. Advantageously, a greater diversity of cases to be expected in clinical practice may thus be synthesized. The further characteristics may allow a generalizability of a model that is trained with the synthesized data. For example, rare pathological cases may thus be synthesized. This may improve an awareness of the model trained with the synthesized data about the biological and pathological diversity, since a greater distribution may be covered by the synthesized training data.

According to an embodiment, a user is given the option to configure a low-dimensional parameter space via a user interface, wherein at least one of the further characteristics is modified based on the user-configured low-dimensional parameter space. This embodiment may in particular be used, if the segmentation is established via a parametric model. The parametric model may be further configured to model structural changes, such as a heart phase. A low-dimensional parameter space may, in particular be a one-dimensional parameter space. For example, a time-dependent, in particular periodic, feature may be modelled. A periodic feature may, for example, be an anatomic part that cycles through recurring states. For example, a periodic feature may be a cardiac cycle. The periodic feature, such as the cardiac cycle, may be described by the one-dimensional parameter. The parameter may describe time-dependent, in particular recurring, states. The parameter values may, for example, be given in percent, e.g. between 0% and 100%, such as 0% to 100% contraction or dilation of the heart. The low-dimensional parameter may induce a shape transformation of the feature, such as a shape transformation of the heart, as modelled anatomical structure. The shape transformation may depend on the point in time of the respective cycle. For another example, a grade of a manifestation of an abnormality may be configured via the low-dimensional parameter. For another example, the low-dimensional parameter may control a blood flow impediment. The blood flow impediment may be controlled at a user specified location, e.g. at a user specified location in the vessel tree of the coronary arteries. For example, the low-dimensional parameter or the blood flow impediment may change the effects of the blood flow model in the part of the vessel tree that is distal to the user specified location. Advantageously, the user may thus be given the option to specifically generate synthetic data of a particular property. This may be useful for specific machine learning purposes to provide specific training data and/or for demonstrational/educational purposes, to provide particular examples as needed in a specific demonstrational/educational situation.

According to an embodiment, the contrasted anatomical structure comprises blood vessels, in particular such that the target anatomical structure is a heart and the contrasted anatomical structure is a coronary tree of the heart. Cardiovascular diseases, in particular coronary heart diseases, are an often-occurring problem, such that providing corresponding training data for a wide diversity of cases can be advantageous. It has been found that the method according to the invention can be particularly useful to synthesize anatomical image data of the heart with contrasted blood vessels, in particular of the coronary tree. In particular, a contrasted computed tomography angiography image may be generated, such that the surrounding anatomical structures stay unaltered, while the heart and vessels regions are contrasted.

According to an embodiment, a blood flow model is applied to generate the contrasted anatomical structure. Additionally or alternatively, a virtual amount of contrast agent is used to generate the contrasted structure. In particular, the blood flow model may modulate a degree of contrast agent injected into the vessels. This embodiment may optionally be used together with the embodiment concerning the low-dimensional parameter space. For example, there may be a parameter a ∈ [0,1] or ranging from 0% to 100%, controlling the amount of contrast. For example, 0 or 0% may represent no contrast and 1 or 100% may represent full contrast. Properly mixing synthesized images from different contrast levels into the training set may render the resulting model robust to contrast agent variability, in particular in situations where the bolus timing was suboptimal or in presence of stenoses. In addition, the realism of the distribution of contrast agent in the vessels may be ensured by using the blood flow model. Optionally, an appropriate blood flow model as known in the state of the art, may be used in the context of this embodiment. The application of a blood flow model may also be used to directly support an educational application of the invention, for example, by specifically generating images with specific degrees of contrast agent.

According to an embodiment, the modelled anatomical structure is one-hot encoded prior to being provided as input for the trained generative machine learning algorithm. In particular via the one-hot encoding, one map per semantic entity of the anatomical structure may be provided. It has been found that applying the one-hot encoding may lead to particular good results in the context of this method.

According to another aspect of the invention, a computer program comprising instructions which, when the program is executed by a computer, cause the computer to carry out the method as described herein is provided. The instructions may comprise any of the method steps and their variants as described herein. For example, the computer program may be stored on a data storage medium, in particular a non-volatile data storage medium. The storage medium may be any computer-readable storage medium. For example, the storage medium may be a solid-state storage medium or an optical storage medium. The storage medium may be a hard-drive, a solid-state-disk, a compact disk, a DVD, a flash storage, an online server, etc.

According to another aspect of the invention, a method for generating training weights to be used in a software module comprising a machine learning algorithm is provided. The training weights are generated by training the machine learning algorithm with synthetic combined x-ray-based image data as obtained by the method for synthesizing combined x-ray-based image data as described herein. Optionally, non-synthesized image data may additionally be used for the training. Advantageously a greater data representativeness may be achieved by using the synthesized image data. An algorithm and/or image processing device with these training weights may thus be more robust towards domain gap vulnerability. Furthermore, more training data may be used, which may lead to better training results.

According to another aspect of the invention, an image processing device comprising a trained machine learning algorithm that is trained with synthetic combined x-ray-based image data as obtained by the method for synthesizing combined x-ray-based image data as described herein is provided. For example, the trained machine learning algorithm may comprise the training weights as described herein. The trained machine learning algorithm may thus show an improved performance, in particular due to being trained with the synthetic image data. Optionally, the machine learning algorithm may be additionally trained with further image data, such as non-synthetic image data. For example, the image processing device may be configured to produce at least partially contrasted image data, in particular combined x-ray-based image data comprising both contrasted and non-contrasted image data, from non-contrasted image data. In particular, the image processing device may be configured to produce contrasted computed tomography angiography data from non-contrasted computed tomography image data.

According to another aspect of the invention, a computer program comprising synthetic combined x-ray-based image data as obtained by the method for synthesizing combined x-ray-based image data as described herein is provided. When the program is executed by a computer, the computer program is in particular configured to cause the computer to provide the synthetic combined x-ray-based image data as demonstrational and/or educational data. For example, the computer program may be configured to provide a virtual training environment and/or a demonstration tool. The computer program may be configured to train users on specific systems and/or devices. The computer program may comprise pairs of non-contrasted x-ray-based image data and contrasted x-ray-based image data, such as non-contrasted CT and contrasted CTA. The computer program may comprise annotations to the pairs. The pairs may be part of a training tool and/or demonstration tool of the computer program. Advantageously, the computer program may be used for improving the understanding of connection between various aspects, such as anatomies, pathologies, contrast agent and original non-contrasted CT data etc.

According to another aspect of the invention an educational and/or demonstrational medium, in particular digital medium, comprising synthetic combined x-ray-based image data as obtained by the method as described herein is provided. The medium is configured to provide the synthetic combined x-ray-based image data as demonstrational and/or educational data. Hence, instead of a computer program, another educational medium comprising the synthetic combined x-ray-based image data may be provided. This medium may have the same advantages and/or features as the computer program.

According to another aspect of the invention, a use of data generated via a method as described herein for providing training data and/or for providing demonstrational data, in particular for education, is provided.

The features and advantages of different embodiments can be combined. The features and advantages of one aspect of the invention, e.g., the method, may be applied to the other aspects, e.g., computer program and the image processing device, and vice versa.

### BRIEF DESCRIPTION OF THE DRAWINGS

The invention shall now be illustrated by means of embodiments with reference to the attached drawings, in which:
Fig. 1 shows a flow diagram of a computer-implemented method for synthesizing combined x-ray-based image data according to an embodiment of the invention; and
Fig. 2 shows a sketch of a user interface of a computer program according to an embodiment of the invention.

### DESCRIPTION OF EMBODIMENTS

Throughout the Figures, the same or corresponding features/elements of the various embodiments are designated with the same reference numbers.

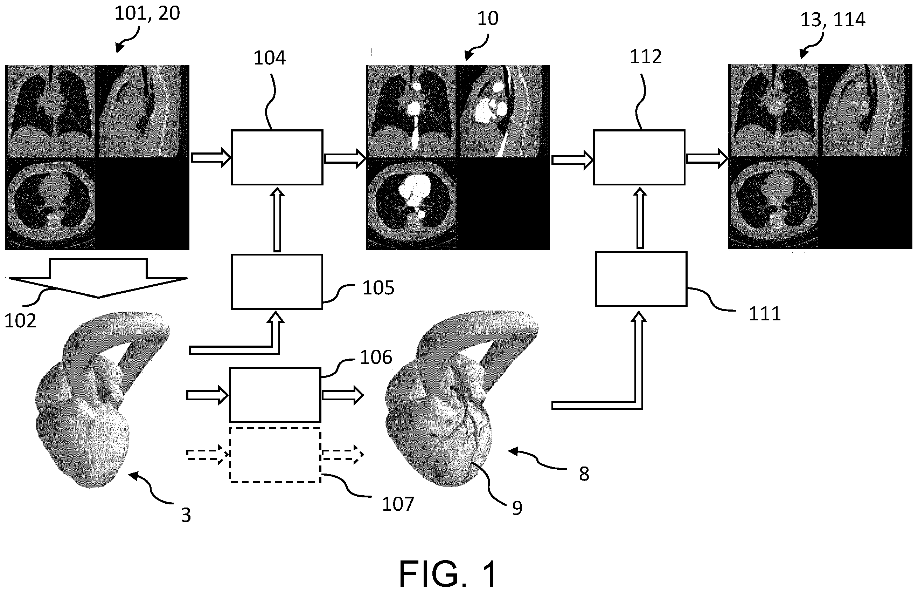

Fig. 1 shows a flow diagram of a computer-implemented method for synthesizing combined x-ray-based image data according to an embodiment of the invention. In a first step 101, a non-contrasted x-ray-based image 20, in this example a non-contrasted computed tomography image, is received. The non-contrasted x-ray-based image 20 comprises three-dimensional image data of the torso region around the heart. In the flow diagram, three different two-dimensional views of the non-contrasted x-ray-based image data 20 are shown.

In a further step 102, a target anatomical structure, here a heart, is segmented, on the x-ray-based image to generate a segmentation 3 of the target anatomical structure. Optionally, the segmenting may be performed by a trained segmentation algorithm that outputs the segmentation 3 and at least one annotation corresponding to the segmentation 3. For example, the segmentation 3 may comprise surface meshes or volumetric labels of the target anatomical structure.

In a further step 104, based on the segmentation 3 of the at least one target anatomical structure, a region-of-interest mask for the non-contrasted x-ray-based image 20 is generated, such that a combination 10 of the non-contrasted x-ray-based image 20 and the region-of-interest mask is obtained. In this combination 10, the region-of-interest mask is overlayed on top of the original non-contrasted x-ray-based image 20.

Optionally, generating the region-of-interest mask may comprise dilating the region-of-interest mask with respect to the segmentation 3 to generate a safety margin.

In an optional step 105, the segmentation 3 may be voxelized for the purpose of generating the region-of-interest mask, such that the region-of-interest mask is a binary mask.

In a further step 106, a modelled anatomical structure 8 corresponding to the target anatomical structure is generated by adding a contrasted anatomical structure 9, namely, in this example, a contrasted coronary tree of the heart, to the segmentation 3 of the target anatomical structure. Accordingly, the modelled anatomical structure 8 comprises the contrasted anatomical structure 9. Thus, advantageously, a completely new anatomical structure of the kind of the target anatomical structure with a detailed contrasted anatomical structure 9, here the coronary tree, can be allocated within the (optionally dilated) region-of-interest mask originating from the non-contrasted x-ray-based image 20.

In an optional step 107, further characteristics of the target anatomical structure are modified. For example, the anatomical shape of the target anatomical structure may be changed, such as changing the shape of a heart. Additionally or alternatively, a medical condition of the target anatomical structure, and/or a time-dependent phase of the target anatomical structure may be changed. Optionally, a user may be given the option to configure a low-dimensional parameter space via a user interface, such that at least one of the further characteristics is modified based on the user-configured low-dimensional parameter space.

Alternatively, the modelled anatomical structure 8 may be based on a premade average model that is adapted according to the target anatomical structure. For example, the premade average model may be based on a segmentation result from another patient, as anatomical shape priors and plausible shape models, or as extrapolated structures using anatomical structure encoding or hierarchical structure activation of connected meshes.

In a further step 112, a trained generative machine learning algorithm, preferably a trained generative adversarial neural network, is applied on the combination 10 of the non-contrasted x-ray-based image 20 and the region-of-interest mask. Additionally, in this step 112, the modelled anatomical structure 8 is used as further input for the trained generative machine learning algorithm.

In an optional step 111, the modelled anatomical structure 8 may be voxelized in preparation of this further step 112 of applying the trained generative machine learning algorithm on the modelled anatomical structure 8. Hence the further input for the trained generative machine learning algorithm may be a voxelized version of the modelled anatomical structure 8.

By application of the generative adversarial neural network, synthetic combined x-ray-based image data 13 comprising both contrasted and non-contrasted image regions are generated. Based on the modelled anatomical structure 8, the generative adversarial neural network changes the area defined by the region-of-interest mask so that this area becomes contrasted, for example by inpainting the modelled anatomical structure 8 into the region-of-interest mask on the non-contrasted x-ray-based image 20. In this example, synthetic combined x-ray-based image data 13 is synthetic contrasted computed tomography angiography data.

In a further step 114, the synthetic combined x-ray-based image data 13 comprising both contrasted and non-contrasted image regions is provided. Optionally, the synthetic combined x-ray-based image data 13 may be provided together with the annotation output by the trained segmentation algorithm in the previous step 102.

Advantageously, in this example concerning the heart, a virtually unlimited number of synthetic hearts and coronary trees can be generated in the synthetic combined x-ray-based image data 13, since the organ modelling part of the pipeline can be used to create different heart shapes and model a wide variety of pathologies in the coronary tree. Having the real-world background from non-contrasted x-ray-based image 20 allows to increase the realism of the synthetic data.

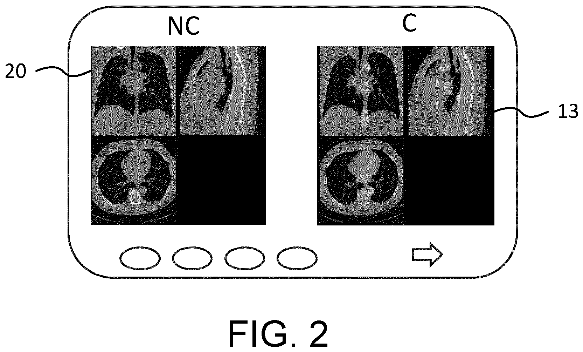

Fig. 2 shows a sketch of a user interface of a computer program according to an embodiment of the invention. The computer program comprises synthetic combined x-ray-based image data 13 obtained by a method as described with respect to Fig. 1, as well as non-contrasted x-ray-based image data 20. The computer program is configured to provide the synthetic combined x-ray-based image data 13 as demonstrational and/or educational data via the user interface. In this example, three different views of three-dimensional synthetic combined x-ray-based image data 13 and three-dimensional non-contrasted x-ray-based image data 20 are shown, respectively.

The above-discussion is intended to be merely illustrative of the present system and should not be construed as limiting the appended claims to any particular embodiment or group of embodiments. Accordingly, the specification and drawings are to be regarded in an illustrative manner and are not intended to limit the scope of the appended claims. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "an" or "a" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS

- 3: segmentation
- 8: modelled anatomical structure
- 9: contrasted anatomical structure
- 10: combination of the non-contrasted x-ray-based image and the region-of-interest mask
- 13: synthetic combined x-ray-based image data
- 20: non-contrasted x-ray-based image

- 101: step of receiving a non-contrasted x-ray-based image
- 102: step of segmenting a target anatomical structure
- 104: step of generating a region-of-interest mask
- 105: step of voxelizing
- 106: step of generating a modelled anatomical structure
- 107: step of changing further characteristics of the target anatomical structure
- 111: step of voxelizing
- 112: step of applying a trained generative machine learning algorithm
- 114: providing the synthetic combined x-ray-based image data

## Claims

1. A computer-implemented method for synthesizing combined x-ray-based image data comprising both contrasted and non-contrasted image data, in particular contrasted computed tomography angiography data, the method comprising the following steps:
- receiving a non-contrasted x-ray-based image (20), in particular a non-contrasted computed tomography image;
- segmenting of at least one target anatomical structure, e.g. a heart, on the x-ray-based image to generate a segmentation (3) of the at least one target anatomical structure;
- based on the segmentation (3) of the at least one target anatomical structure, generating a region-of-interest mask for the non-contrasted x-ray-based image (20);
- generating and/or obtaining a modelled anatomical structure (8) corresponding to the at least one target anatomical structure, the modelled anatomical structure (8) comprising a contrasted anatomical structure (9);
- applying a trained generative machine learning algorithm, in particular a trained generative adversarial neural network, on the non-contrasted x-ray-based image (20) with the region-of-interest mask, wherein the modelled anatomical structure (8) is used as further input for the trained generative machine learning algorithm, to generate synthetic combined x-ray-based image data (13) comprising both contrasted and non-contrasted image regions, in particular synthetic contrasted computed tomography angiography data, such that an area defined by the region-of-interest mask is replaced and/or changed based on the modelled anatomical structure (8) to be contrasted;
- providing the synthetic combined x-ray-based image data (13) comprising both contrasted and non-contrasted image regions.

2. The method according to claim 1,
wherein the segmenting is performed by a trained segmentation algorithm,
wherein the segmentation algorithm outputs the segmentation (3) and at least one annotation corresponding to the segmentation (3),
wherein the annotation is provided together with the synthetic combined x-ray-based image data (13).

3. The method according to any one of the preceding claims,
wherein, generating the region-of-interest mask based on the segmentation (3) comprises dilating the region-of-interest mask with respect to the segmentation (3).

4. The method according to any one of the preceding claims,
wherein the generative machine learning algorithm is trained to generate the synthetic combined x-ray-based image data (13) by inpainting the modelled anatomical structure (8) into the region-of-interest mask on the non-contrasted x-ray-based image (20).

5. The method according to any one of the preceding claims,
wherein the segmentation (3) is voxelized, in particular with binary voxels, when the region-of-interest mask is generated
and/or
wherein the modelled anatomical structure (8) is voxelized prior to applying the trained generative machine learning algorithm on it.

6. The method according to any one of the preceding claims,
wherein the modelled anatomical structure (8) is based on a premade average model that is adapted according to the target anatomical structure.

7. The method according to any one of the preceding claims,
wherein the modelled anatomical structure (8) is generated based on the target anatomical structure by modifying the target anatomical structure at least by adding the contrast of the contrasted anatomical structure (9) and optionally by modifying further characteristics of the target anatomical structure.

8. The method according to claim 7,
wherein modifying further characteristics comprises one or several of the following:
changing the anatomical shape of the target anatomical structure within the constraints of the region-of-interest mask via a shape changing algorithm,
changing a medical condition of the target anatomical structure, and/or
changing a time-dependent phase of the target anatomical structure.

9. The method according to claim 7 or 8,
wherein a user is given the option to configure a low-dimensional parameter space via a user interface,
wherein at least one of the further characteristics is modified based on the user-configured low-dimensional parameter space.

10. The method according to any one of the preceding claims,
wherein the contrasted anatomical structure (9) comprises blood vessels,
in particular such that the target anatomical structure is a heart and the contrasted anatomical structure (9) is a coronary tree of the heart.

11. The method according to claim 9 or 10,
wherein a blood flow model is applied to generate the contrasted anatomical structure (9).

12. The method according to any one of claims 10 to 11,
wherein a virtual amount of contrast agent is used to generate the contrasted structure.

13. A computer program comprising instructions which, when the program is executed by a computer, cause the computer to carry out the method according to any one of the preceding claims.

14. An image processing device comprising a trained machine learning algorithm that is trained with synthetic combined x-ray-based image data (13) as obtained by the method according to any one of claims 1 to 12.

15. A computer program comprising synthetic combined x-ray-based image data (13) as obtained by the method according to any one of claims 1 to 12, wherein, when the program is executed by a computer, the computer program is in particular configured to cause the computer to provide the synthetic combined x-ray-based image data (13) as demonstrational and/or educational data.
